(19) Europäisches Patentamt
European Patent Office
Office européen des brevets

(11) Publication number: 0 010 285
A1

# (12) EUROPEAN PATENT APPLICATION

(21) Application number: 79103971.2

(22) Date of filing: 15.10.79

(51) Int. Cl.³: C 08 F 8/32
C 08 C 19/36

(30) Priority: 17.10.78 US 952165

(43) Date of publication of application:
30.04.80 Bulletin 80/9

(84) Designated Contracting States:
BE DE FR GB IT NL

(71) Applicant: The B.F. Goodrich Company
500 South Main Street
Akron, Ohio 44318(US)

(72) Inventor: Riew, Changkiu Keith
2173 Rickel Drive
Akron, Ohio 44313(US)

(74) Representative: von Kreisler, Alek et al,
Deichmannhaus am Hauptbahnhof
D-5000 Köln 1(DE)

## (54) Hydroxyl-terminated liquid polymers and process for preparation thereof.

(57) Hydroxyl-terminated liquid polymers are prepared by reacting at least one aminoalcohol with a carboxyl-terminated liquid polymer having a carbon-carbon backbone. These polymers have better hydrolytic stability than hydroxyl-terminated liquid polymers containing ester groups, and are useful together with polyisocyanates for open or centrifugal casting, liquid injection molding and the like to produce various thermoset elastomeric products.

EP 0 010 285 A1

Croydon Printing Company Ltd.

# HYDROXYL-TERMINATED LIQUID POLYMERS AND PROCESS FOR PREPARATION THEREOF

## BACKGROUND OF THE INVENTION

Hydroxyl-terminated liquid polymers containing ester groups are known in the art. For example, U.S. Patents 3,551,472 and 3,699,153 disclose such polymers made by reacting carboxyl-terminated liquid polymers with a diol in the presence of an acid catalyst, and U.S. Patent 3,712,916 discloses such polymers made by reacting a carboxyl-terminated liquid polymer with ethylene oxide in the presence of a tertiary amine catalyst. Ester groups present near the terminal portions of such polymers are rather prone to hydrolytic degradation and may reduce the useful life of products in which the polymers are used. New hydroxyl-terminated liquid polymers are desired having improved hydrolytic stability.

## SUMMARY OF THE INVENTION

Hydroxyl-terminated liquid polymers are prepared by reacting at least one aminoalcohol with a carboxyl-terminated liquid polymer having a carbon-carbon backbone. The hydroxyl-terminated liquid polymers have the formula

$$HO{-}X{-}\overset{O}{\overset{\|}{C}}{-\!\!-\!\!-}(B){-\!\!-\!\!-}\overset{O}{\overset{\|}{C}}{-}X{-}OH$$

wherein B is the carbon-carbon backbone, and HO-X- is a univalent radical obtained by removing a hydrogen atom from an amine group of an aliphatic, alicyclic, heterocyclic or aromatic aminoalcohol containing one primary or secondary hydroxyl group and one primary or secondary amine group per molecule.

## DETAILED DESCRIPTION

New hydroxyl-terminated liquid polymers having improved hydrolytic stability are produced by

reacting at least one aminoalcohol with a carboxyl-terminated liquid polymer having a carbon-carbon backbone. The hydroxyl-terminated liquid polymers have the formula

$$HO{-}X{-}\overset{O}{\overset{\|}{C}}{-\!\!-\!\!-}(B){-\!\!-\!\!-}\overset{O}{\overset{\|}{C}}{-}X{-}OH$$

wherein HO-X is a univalent radical obtained by removing a hydrogen atom from an amine group of an aliphatic, alicyclic, heterocyclic or aromatic aminoalcohol containing one primary or secondary hydroxyl group and one primary or secondary amine group per aminoalcohol molecule, with primary hydroxyl and amine groups being preferred. B is a polymeric backbone comprising carbon-carbon linkages. Generally, the carbon-carbon linkages comprise at least about 95 wt.% of total polymeric backbone weight, preferably about 100 wt.% of total polymeric backbone weight. The hydroxyl-terminated liquid polymers contain an average of at least about 1.5 hydroxyl groups per molecule, more preferably from about 1.5 to 20 hydroxyl groups per molecule, and even more preferably from about 1.7 to about 4 hydroxyl groups per molecule. The fact that the average number may be slightly less than 2 is accounted for by the fact that not all hydroxyl-terminated molecules in a given sample need have hydroxyl groups at both ends of the molecule. Average numbers of hydroxyl groups per molecule above 2 are explained by the fact that additional group(s) may be located pendant to the polymer backbone. For example, an aminoalcohol will react with acrylic acid backbone unit(s) in the starting carboxyl-terminated liquid polymer as well as with end carboxyl group(s), resulting in both pendant and terminal hydroxyl functionality.

The hydroxyl-terminated liquid polymers of this invention typically have Brookfield viscosities (measured using a Brookfield RVT viscometer at 27°C), from about 200 cps to about 2,000,000 cps, more preferably from about 200 cps to about 1,200,000 cps. The hydroxyl-terminated liquid polymers also typically have hydroxyl equivalent weights (gram molecular weight per hydroxyl group) from about 300 to about 4,000, more preferably from about 300 to about 2,500.

The carboxyl-terminated liquid polymers used as starting materials may have Brookfield viscosities from about 500 cps to about 2,500,000 cps, more preferably from about 500 cps to about 1,200,000 cps, and of course have a backbone comprising carbon-carbon linkages. The backbone may contain polymerized units of at least one vinylidene monomer having at least one terminal $CH_2=C<$ group and being selected from the group consisting of (a) monoolefins containing 2 to 14 carbon atoms, more preferably 2 to 8 carbon atoms, such as ethylene, propylene, isobutylene, 1-butene, 1-pentene, 1-hexene, 1-dodecene and the like; (b) dienes containing 4 to 10 carbon atoms, more preferably 4 to 8 carbon atoms, such as butadiene, isoprene, 2-isopropyl-1,3-butadiene, and the like; and (c) vinyl and allyl ethers of alkyl radicals containing 1 to 8 carbon atoms such as vinyl methyl ether, allyl methyl ether, and the like. The monoolefins and dienes are preferred.

The vinylidene monomers described above may be polymerized readily with from 0% to about 50% by weight, more preferably from 0% to about 35% by weight, of at least one vinylidene comonomer selected from the group consisting of (d) vinyl aromatics having the formula

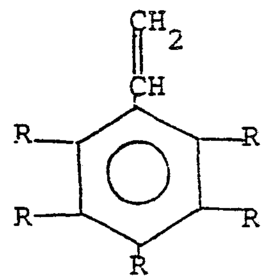

wherein R is hydrogen or an alkyl radical containing from 1 to 4 carbon atoms, such as styrene, α-methyl styrene, vinyl toluene, and the like; (e) vinyl nitriles having the formula

$$CH_2=\overset{R^1}{\overset{|}{C}}-C\equiv N$$

wherein $R^1$ is hydrogen or an alkyl radical containing 1 to 3 carbon atoms, such as acrylonitrile, methacrylonitrile and the like; (f) divinyls and diacrylates such as divinyl benzene, divinyl ether, diethylene glycol diacrylate, and the like; (g) amides of α,β-olefinically unsaturated carboxylic acids containing 2 to 8 carbon atoms such as acrylamide and the like; (h) hydroxyl-containing vinylidene monomers for the purpose of including some random hydroxyl functionality, such as allyl alcohol and vinyl benzyl alcohol; (i) certain acrylic acids and acrylates; and (j) other vinylidene comonomers such as diacetone acrylamide, N-vinyl-2-pyrrolidone and the like. The acrylic acids and acrylates have the formula

$$CH_2=\overset{R^2}{\overset{|}{C}}-\overset{O}{\overset{\|}{C}}-O-R^3$$

wherein $R^2$ is hydrogen or an alkyl radical containing 1 to 3 carbon atoms and $R^3$ is hydrogen or an alkyl radical containing 1 to 18 carbon atoms, more preferably 1 to 8 carbon atoms, or an alkoxyalkyl, alkylthio-

BAD ORIGINAL

alkyl, or cyanoalkyl radical containing 2 to 12 carbon atoms, more preferably 2 to 8 carbon atoms. Even more preferably $R^3$ is hydrogen or an alkyl radical containing 1 to 8 carbon atoms. Examples of suitable acrylates include ethyl acrylate, butyl acrylate, hexyl acrylate, 2-ethylhexyl acrylate, dodecyl acrylate, octadecyl acrylate, methoxyethyl acrylate, butoxyethyl acrylate, hexylthioethyl acrylate, β-cyanoethyl acrylate, cyanooctyl acrylate, methyl methacrylate, ethyl methacrylate, octyl methacrylate and the like. Often two or more types of these polymerized monomeric units are contained in the polymeric backbone, with vinyl nitriles, vinyl aromatics, and N-vinyl-2-pyrrolidone being preferred.

When the acrylic acids and acrylates just described are used, transamidation reactions may occur to produce pendant hydroxyl functionality as shown in the following equation employing 2-amino-1-ethanol:

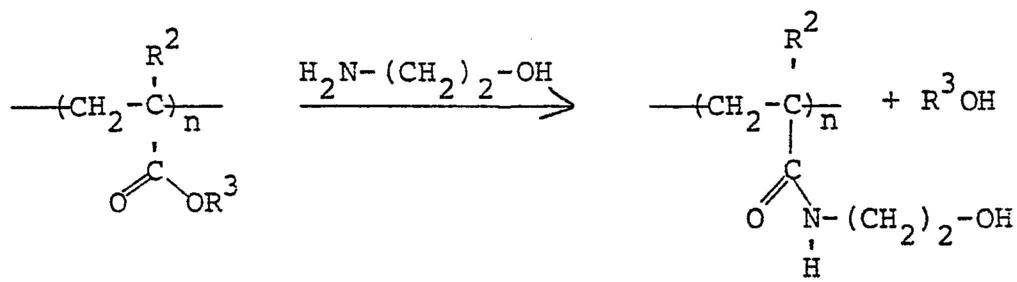


A further reaction by the pendant hydroxyls may occur, i.e., transesterification with another acrylate linkage, resulting in crosslinking and an increase in product viscosity:

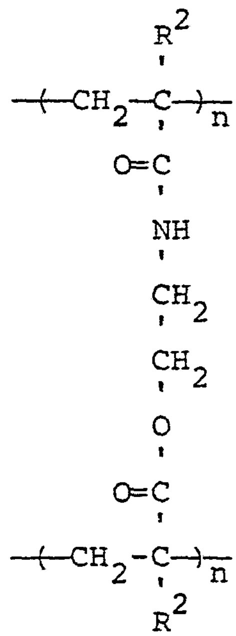

Liquid carboxyl-terminated polymers may be prepared by free-radical polymerization using carboxyl-containing initiators and/or modifiers as disclosed in U.S. Patent 3,285,949 and German Patent 1,150,205 and by solution polymerization using lithium metal or organometallic compounds and post-treating the polymers to form carboxyl groups as disclosed in U.S. Patents 3,135,716 and 3,431,235. The polymers can also be prepared by reacting liquid polymers having other than terminal carboxyl groups with compounds so as to yield carboxyl groups. For example, liquid halogen-terminated polymers can be reacted with unsaturated anhydrides in the presence of Lewis acids to yield carboxyl-terminated liquid polymers. Thus, it is seen that the method of preparing the liquid carboxyl-terminated polymers is not critical to the invention. The essential features of the polymers are that at least terminal carboxyl groups be present together with a carbon-carbon polymeric backbone.

Examples of preferred carboxyl-terminated liquid polymers include carboxyl-terminated polyethylene, carboxyl-terminated polyisobutylene, carboxyl-terminated polybutadiene, carboxyl-terminated polyisoprene, as well as carboxyl-terminated poly(butadiene/acrylonitrile), carboxyl-terminated poly(butadiene/styrene), and carboxyl-terminated poly(butadiene/n-butyl acrylate). Carboxyl-terminated copolymers of butadiene with acrylonitrile or styrene were found to be especially useful. These polymers may contain from about 50% to about 99% by weight of butadiene, from about 0% to about 40% by weight of acrylonitrile or styrene and from about 1% to about 15% by weight of carboxyl, based upon the total weight of polymer.

Aminoalcohols suitable for use in the process of this invention typically contain from 1 to 20 carbon atoms, more preferably from 1 to 10 carbon atoms, one primary or secondary hydroxyl group, and one primary or secondary amine group per molecule, with primary hydroxyl and amine groups being preferred. Of course, tertiary amine groups may also be present but are not reactive in the process, although they may hydrolyze the acrylates described heretofore as comonomers. Suitable aminoalcohols include 2-amino-1-ethanol, 2-amino-1-butanol, 1-amino-1-cyclopentanemethanol, 6-amino-1-hexanol, 2-amino-3-methyl-1-butanol, 2-amino-2-methyl-1-propanol, 5-amino-1-pentanol, 2-amino-1-phenylethyl alcohol, 1-amino-2-propanol, 3-amino-1-propanol, 2-benzylaminoethanol, N-β-hydroxyethylpiperazine, 2-anilinoethanol, 2-benzimidazolemethanol, 2-piperidinemethanol, 3-piperidinemethanol, 2-piperidineethanol, and o-, m- and p-aminobenzyl alcohol. Excellent results were obtained using 2-amino-1-ethanol.

A solvent is not required for the process of this invention but may be used. Mixtures of solvents may also be used. Suitable solvents include aliphatic and cycloaliphatic ethers containing from 3 to 10 carbon atoms, more preferably from 3 to 6 carbon atoms, such as tetrahydrofuran, diethylether and the like. Also suitable as solvents and more preferred are aromatic compounds having the formula

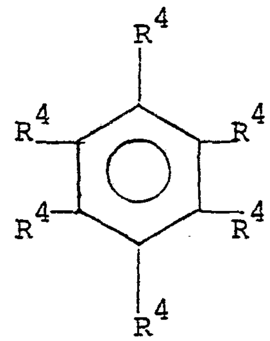

wherein $R^4$ is hydrogen or an alkyl radical containing 1 to 3 carbon atoms, and at least two $R^4$s are hydrogen. More preferably $R^4$ is hydrogen or an alkyl radical containing 1 or 2 carbon atoms, and at least three $R^4$s are hydrogen. Suitable aromatic solvents include benzene, toluene, o-,m- and p-xylene, o-, m- and p-diethylbenzene, cumene, mesitylene and the like.

A sufficient quantity of at least one aminoalcohol may be reacted with a carboxyl-terminated liquid polymer in order to produce a hydroxyl-terminated liquid polymer containing at least about 1.5 hydroxyl groups per molecule. Typically the average number of total carboxyl groups in a liquid polymer before reaction will be from about 1.5 to about 20 groups per molecule, more preferably from about 1.7 to about 4 groups per molecule. In this typical case, from about 1.2 to about 6 amine equivalents, more preferably from about 1.2 to about 3 amine equivalents, of at least one aminoalcohol can be used per equivalent of carboxyl-terminated liquid polymer. Larger

aminoalcohol amounts than 6 amine equivalents per equivalent of carboxyl-terminated liquid polymer may make purification (i.e., removal of unreacted aminoalcohol) of the hydroxyl-terminated liquid polymer more difficult.

No catalyst is required, and many types of mixing apparatus can be used in the hydroxyl termination reaction. For example, simple mixers can be used, including turbine stirrers as well as propeller mixers. Reaction components can be combined in any order. The reaction mixture may be heated (or refluxed if a solvent is used) at a temperature from about 80°C. to about 200°C., until more than 90% of carboxyl groups have reacted with the aminoalcohol, i.e., until the amidation reaction is more than 90% complete. Reaction time is typically about 1 to 120 hours. By-products may be removed by evaporation or the like as they are formed (e.g., water from the carboxyl-amine reaction).

Low molecular weight diesters may be added at, near the end of, or after reaction in order to eliminate residual aminoalcohol by a transamidation reaction. Such diesters typically have molecular weights less than about 300, for example diethyl maleate, diethyl malonate, diethyl methylsuccinate, and the like. The diesters may also function as reactive plasticizers in subsequent curing reactions if not removed during purification.

The hydroxyl-terminated liquid polymers may be purified by vacuum distillation or by washing with a solvent such as a benzene-methanol mixture in order to remove the unreacted aminoalcohol, followed by drying the polymer. The structure of amide formed during preparation of the hydroxyl-terminated liquid polymers can be determined by infrared spectroscopy.

Amine value can be analyzed quantitatively following the procedure described by Siggia, Quantitative Organic Analysis via Functional Groups, N.Y., Wiley and Sons, Inc., 1963, pp. 452-456, using a toluene/isopropanol solvent mixture instead of Siggia's ethylene glycol/isopropanol mixture.

The following examples illustrate the present invention more fully.

EXAMPLE 1

Carboxyl-terminated Liquid Polymer

A carboxyl-terminated poly(butadiene/acrylonitrile) was prepared according to the general method of U.S. Patent 3,285,959. The carboxyl-terminated liquid polymer was found to have a Brookfield viscosity of about 55,000 cps. (measured using a Brookfield RVT viscometer at 27°C.) and to contain about 82.7 wt.% butadiene and about 10 wt.% acrylonitrile. It is sold under the trademark Hycar® CTBN 1300X15 by The BFGoodrich Company, Chemical Division.

The amount of 2-amino-1-ethanol required to react with a given amount of the carboxyl-terminated liquid polymer was calculated using the formula:

$$\frac{(Ephr_{COOH}) \times (Mol.\ Wt._{AA}) \times (\frac{AA}{CTP}\ Ratio) \times (Wt._{CTP})}{100}$$

where $Ephr_{COOH}$ = carboxyl equivalents per hundred weight parts of carboxyl-terminated liquid polymer;

$Mol.\ Wt._{AA}$ = molecular weight of the aminoalcohol, i.e., 61 for 2-amino-1-ethanol;

$\frac{AA}{CTP}$ Ratio = desired ratio of amine equivalents of aminoalcohol to equivalents of carboxyl-terminated liquid polymer (CTP); and

$Wt._{CTP}$ = weight in grams of carboxyl-terminated liquid polymer (CTP).

<u>Hydroxyl-terminated Liquid Polymer</u>

The carboxyl-terminated liquid polymer produced by the method of U.S. Patent 3,285,949 was found to have an $Ephr_{COOH}$ of 0.053 and was reacted with 2-amino-1-ethanol in a 1.2 AA/CTP Ratio, i.e., 1006 grams of carboxyl-terminated liquid polymer was reacted with 39.0 grams of 2-amino-1-ethanol.

The following reaction procedure was used. A 2-liter, 4-necked glass flask was cleaned thoroughly with soap and water, rinsed first with water and then with acetone, and flushed with nitrogen until dry. The flask was equipped with an air stirrer, thermometer, nitrogen inlet tube, and Dean-Stark water trap with water condenser. The carboxyl-terminated liquid polymer and 2-amino-1-ethanol were charged to the flask with stirring together with 200 ml. toluene, and the reaction mixture was heated to about 150° C. using an oil bath. The flask was purged continuously with nitrogen during reaction. After final $Ephr_{COOH}$ of the reaction mixture was reduced to less than 10% of the initial $Ephr_{COOH}$, the gas inlet tube was replaced by a stopper, and the water condenser was connected to a vacuum pump. A vacuum (about 1 to 2 mm Hg) was drawn on the flask and maintained for about 2 hours in order to remove some excess 2-amino-1-ethanol and other volatiles. A hydroxyl-terminated liquid polymer was produced which is believed to have the following formula:

$$HO-(CH_2)_2-\overset{H}{\overset{|}{N}}-\overset{O}{\overset{\|}{C}}-(B)-\overset{O}{\overset{\|}{C}}-\overset{H}{\overset{|}{N}}-(CH_2)_2-OH$$

wherein B is a polymeric butadiene/acrylonitrile backbone, and $HO-(CH_2)_2-N-$ is a species of the univalent radical HO-X- defined heretofore, i.e., it is obtained by removing a hydrogen atom from the primary amine group of 2-amino-1-ethanol. The hydroxyl-terminated liquid polymer was found to have a Brookfield viscosity of 360,000 cps. at 27°C. using a Brookfield RVT viscometer and #4 spindle. It was also found to have an $Ephr_{OH}$ of 0.042, $Ephr_{OH}$ being defined as the hydroxyl equivalents per hundred weight parts of hydroxyl-terminated liquid polymer.

Cure of Hydroxyl-terminated Liquid Polymer

Several 10-gram portions of the hydroxyl-terminated liquid polymer described above were mixed using a spatula with toluene diisocyanate in amounts varying from 0.49 gram to 0.6 gram. Each sample was placed individually in a small aluminum pan and cured for 2 hours at 100°C. in a circulating air oven. The products were found to be rubbery.

## EXAMPLE 2

The above hydroxyl-termination reaction was also performed at 125°C. in the absence of toluene using a carboxyl-terminated liquid polymer having a Brookfield viscosity of about 112,000 cps. (measured using a Brookfield RVT viscometer at 27°C), containing about 76.5 wt.% butadiene and about 16.4 wt.% acrylonitrile, and having an $Ephr_{COOH}$ of about 0.052. It is sold under the trademark Hycar® CTBN 1300X8 by The BFGoodrich Company, Chemical Division. This polymer was reacted with 2-amino-1-ethanol in a 1.5 AA/CTP Ratio according to the following recipe:

| Material | Wt. (g) | Equivalents |
|---|---|---|
| Carboxyl-terminated liquid polymer | 1000 | 0.52 |
| 2-amino-1-ethanol | 47.6 | 0.779 |
| Diethyl Maleate | 23.5 | 0.273 |

The diethyl maleate was added after approximately 8 hours of reaction in order to eliminate residual 2-amino-1-ethanol. Total reaction time was about 12 hours. Again, a hydroxyl-terminated liquid polymer was produced which is believed to have the following formula:

$$HO-(CH_2)_2-\overset{H}{\overset{|}{N}}-\overset{O}{\overset{\|}{C}}-(B)-\overset{O}{\overset{\|}{C}}-\overset{H}{\overset{|}{N}}-(CH_2)_2-OH$$

wherein B is a polymeric butadiene/acrylonitrile backbone, and $HO-(CH_2)_2-N-$ is a species of the univalent radical HO-X- defined heretofore, i.e., it is obtained by removing a hydrogen atom from the primary amine group of 2-amino-1-ethanol.

The hydroxyl-terminated liquid polymers produced by the process of this invention contain amide groups adjacent to the polymer backbone and have improved hydrolytic stability compared to similar polymers (e.g., those of U.S. Patents 3,551,472, 3,699,153 and 3,712,916) wherein ester groups are present. The novel polymers are useful together with polyisocyanates for open or centrifugal casting, liquid injection molding and the like to make thermoset elastomeric objects such as flexible automotive parts, (e.g., side shields and front ends), and can also be used as binders for belts, hoses or the like.

CLAIMS

1. A hydroxyl-terminatdd liquid polymer containing an average of at least about 1.5 hydroxyl groups per molecule, said polymer having the formula

$$HO-X-\overset{O}{\overset{\|}{C}}-\!\!-\!\!-(-B-)-\!\!-\!\!-\overset{O}{\overset{\|}{C}}-X-OH$$

wherein HO-X- is a univalent radical obtained by removing a hydrogen atom from an amine group of an aliphatic, alicyclic, heterocyclic or aromatic aminoalcohol containing from 1 to 20 carbons, one primary or secondary hydroxyl group, and one primary or secondary amine group per aminoalcohol molecule, and B is a polymeric backbone containing carbon-carbon linkages comprising at least 95% of total polymeric backbone weight, said backbone B containing polymerized units of at least one vinylidene monomer having at least one terminal $CH_2=C<$ group, said monomer being selected from the group consisting of (a) monoolefins containing 2 to 14 carbon atoms, (b) dienes containing 4 to 10 carbon atoms, and (c) vinyl and allyl ethers of alkyl radicals containing 1 to 8 carbon atoms.

2. A polymer of claim 1 containing an average from about 1.5 to 20 hydroxyl groups per molecule, wherein said carbon-carbon linkages comprise 100% by weight of total polymeric backbone weight, and said monomer is selected from the group consisting of (a) monoolefins containing 2 to 8 carbon atoms, and (b) dienes containing 4 to 8 carbon atoms.

3. A polymer of claim 2 containing an average from about 1.7 to about 4 hydroxyl groups per molecule, wherein said vinylidene monomer contains copolymerized therewith from 0 to about 50% by weight of at least one vinylidene comonomer selected from the group consisting of (d) vinyl aromatics having the formula

BAD ORIGINAL

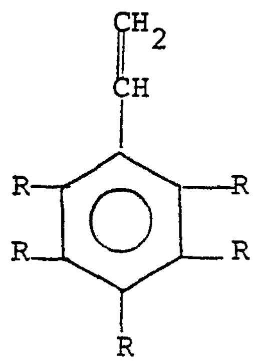

wherein R is hydrogen or an alkyl radical containing from 1 to 4 carbon atoms, (e) vinyl nitriles having the formula

$$CH_2=\overset{R^1}{\overset{|}{C}}-C\equiv N$$

wherein $R^1$ is hydrogen or an alkyl radical containing 1 to 3 carbon atoms, (f) divinyls and diacrylates, (g) amides of α,β-olefinically unsaturated carboxylic acids containing 2 to 8 carbon atoms, (h) hydroxyl-containing vinylidene monomers, (i) acrylic acids and acrylates having the formula

$$CH_2=\overset{R^2}{\overset{|}{C}}-\overset{O}{\overset{\|}{C}}-O-R^3$$

said $R^2$ being hydrogen or an alkyl radical containing 1 to 3 carbon atoms and said $R^3$ being hydrogen, an alkyl radical containing 1 to 8 carbon atoms, or an alkoxyalkyl, alkylthioalkyl or cyanoalkyl radical containing 2 to 8 carbon atoms, and (j) diacetone acrylamide or N-vinyl-2-pyrrolidone.

4. A polymer of claim 3 wherein said aminoalcohol contains one primary hydroxyl group and one primary amine group per molecule, and said comonomer is selected from the group consisting of (f) said vinyl aromatics and (g) said vinyl nitriles.

5. A polymer of claim 4 wherein said vinylidene monomer is at least one of said dienes, and said comonomer is at least one of said vinyl aromatics.

6. A polymer of claim 5 wherein said amino-alcohol is 2-amino-1-ethanol, said vinylidene monomer is butadiene and said comonomer is styrene.

7. A polymer of claim 4 wherein said vinylidene monomer is at least one of said dienes, and said comonomer is at least one of said vinyl nitriles.

8. A polymer of claim 7 wherein said amino-alcohol is 2-amino-1-ethanol, said vinylidene monomer is butadiene and said comonomer is acrylonitrile.

9. A process for preparing a hydroxyl-terminated liquid polymer containing an average of at least about 1.5 hydroxyl groups per molecule,

(1) said process comprising reacting (a) a carboxyl-terminated liquid polymer with (b) at least one aliphatic, alicyclic, heterocyclic or aromatic aminoalcohol containing from 1 to 20 carbon atoms, one primary or secondary hydroxyl group, and one primary or secondary amine group per aminoalcohol molecule, and

(2) said amine-terminated liquid polymer having the formula

$$HO-X-\overset{O}{\overset{\|}{C}}-\!\!-\!\!-(B)-\!\!-\!\!-\overset{O}{\overset{\|}{C}}-X-OH$$

wherein HO-X- is a univalent radical obtained by removing a hydrogen atom from a primary or secondary amine group of said aminoalcohol, and B is a polymeric backbone containing carbon-carbon linkages comprising at least 95% of total polymeric backbone weight, said backbone B containing polymerized units of at least one vinylidene monomer having at least one terminal $CH_2=C<$ group, said monomer being selected from the group consisting of (a) monoolefins containing 2 to 14 carbon atoms, (b) dienes containing 4 to 10 carbon

atoms, and (c) vinyl and allyl ethers of alkyl radicals containing 1 to 8 carbon atoms.

10. A process of claim 9 wherein said hydroxyl-terminated liquid polymer contains an average from about 1.5 to about 20 hydroxyl groups per molecule, said carbon-carbon linkages comprise 100% by weight of total polymeric backbone weight, and said monomer is selected from the group consisting of (a) monoolefins containing 2 to 8 carbon atoms, and (b) dienes containing 4 to 8 carbon atoms.

11. A process of claim 10 wherein said hydroxyl-terminated liquid polymer contains an average from about 1.7 to about 4 hydroxyl groups per molecule, said vinylidene monomer contains copolymerized therewith from 0 to about 50% by weight of at least one comonomer selected from the group consisting of (e) vinyl aromatics having the formula

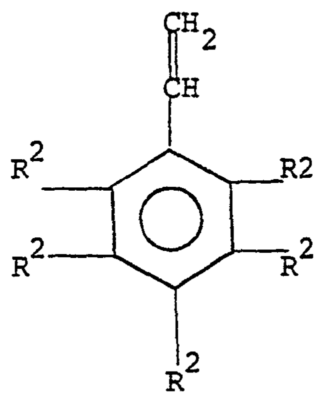

wherein $R^2$ is hydrogen or an alkyl radical containing from 1 to 4 carbon atoms, (f) vinyl nitriles having the formula

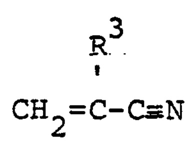

wherein $R^3$ is hydrogen or an alkyl radical containing 1 to 3 carbon atoms, (g) divinyls and diacrylates, (h) amides of α,β-olefinically unsaturated carboxylic

acids containing 2 to 8 carbon atoms, (h) hydroxyl-containing vinylidene monomers, (i) acrylic acids and acrylates having the formula

$$CH_2=\overset{R^2}{\overset{|}{C}}-\overset{O}{\overset{\|}{C}}-O-R^3$$

said $R^2$ being hydrogen or an alkyl radical containing 1 to 3 carbon atoms and said $R^3$ being hydrogen, an alkyl radical containing 1 to 8 carbon atoms, or an alkoxyalkyl, alkylthioalkyl or cyanoalkyl radical containing 2 to 8 carbon atoms, and (j) diacetone acrylamide or N-vinyl-2-pyrrolidone.

12. A process of claim 11 wherein said aminoalcohol contains one primary hydroxyl group and one primary amine group per molecule, and said comonomer is selected from the group consisting of (f) said vinyl aromatics and (g) said vinyl nitriles.

13. A process of claim 12 wherein said vinylidene monomer is at least one of said dienes, and said comonomer is at least one of said vinyl aromatics.

14. A process of claim 13 wherein said aminoalcohol is 2-amino-1-ethanol, said vinylidene monomer is butadiene and said comonomer is styrene.

15. A process of claim 12 wherein said vinylidene monomer is at least one of said dienes, and said comonomer is at least one of said vinyl nitriles.

16. A process of claim 15 wherein said aminoalcohol is 2-amino-1-ethanol, said vinylidene monomer is butadiene and said comonomer is acrylonitrile.

17. A process of claim 9 wherein a diester with molecular weight less than about 300 is added at, near the end of, or after the aminoalcohol/carboxyl-terminated liquid polymer reaction in an amount sufficient to react with residual aminoalcohol.

European Patent Office

# EUROPEAN SEARCH REPORT

Application number
EP 79 10 3971

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | |
| | FR - A - 2 263 253 (SHELL)<br>* Claims 1,6,7 *<br>--<br>DE - A - 1 912 517 (LUBRIZOL)<br>* Claim 1 *<br>---- | 1<br><br><br>1 | C 08 F 8/32<br>C 08 C 19/36 |
| | | | TECHNICAL FIELDS SEARCHED (Int.Cl. 3) |
| | | | C 08 F 8/00<br>C 08 F 8/14<br>C 08 F 8/32<br>C 08 C 19/36 |
| | | | CATEGORY OF CITED DOCUMENTS<br>X: particularly relevant<br>A: technological background<br>O: non-written disclosure<br>P: intermediate document<br>T: theory or principle underlying the invention<br>E: conflicting application<br>D: document cited in the application<br>L: citation for other reasons |
| X | The present search report has been drawn up for all claims | | &: member of the same patent family, corresponding document |

| Place of search | Date of completion of the search | Examiner |
|---|---|---|
| The Hague | 17-12-1979 | PEETERS J.C.J.J. |

EPO Form 1503.1 06.78